# EUROPEAN PATENT APPLICATION

(11) **EP 4 178 057 A1**
(43) Date of publication of application: **10.05.2023**
(21) Application number: 21206191.5
(22) Date of filing: 03.11.2021
(51) Int. Cl.: H02H 7/18, H02J 7/00

(54) **ELECTRICAL ENERGY STORAGE DEVICE WITH AN INTERNAL ELECTRONIC CIRCUIT AND AN INTRINSICALLY SAFE FREEWHEELING ELEMENT AND PROTECTION CIRCUIT FOR SUCH AN ELECTRICAL ENERGY STORAGE DEVICE**

(71) Applicant: Wiferion GmbH, 79111 Freiburg (DE)
(72) Inventor: MAARES, Matthias, 79312 Emmendingen (DE)
(74) Representative: Hofstetter, Schurack & Partner

(57) **Abstract**

The invention is concerned with an electric energy storage device (10) for providing an electric supply voltage (V) between two electric terminals (13) that are accessible from outside the energy storage device (10). A protection circuit (15) is provided that comprises a freewheeling circuit branch (16) that interconnects the two terminals (13) of the energy storage device (10) and that comprises a freewheeling element (17). The invention is characterized in that in the freewheeling circuit branch (16) a switching element (23) is connected in series to the freewheeling element (17) and a control unit (25) is designed to control a conduction state of the switching element (23) as a function of at least one characteristic quantity of a forward voltage (18) and/or a forward current (19) through the freewheeling element (17).

## Description

The invention is concerned with an electrical energy storage device that provides a supply voltage between two electric terminals that are accessible from outside the energy storage device. The supply voltage is generated by at least one electrical energy storage unit, e.g. a galvanic cell and/or a charged supercapacitor. The respective storage unit may be switched by an internal electronic circuit, in particular an internal protection switch. An additional protection circuit is provided that comprises a freewheeling circuit branch which interconnects the two terminals in parallel to the at least one storage unit and the internal electronic circuit. The invention is also concerned with the protection circuit for an electric energy storage device of the described kind.

When DC currents (DC - direct current) are switched off by an internal electronic circuit, a negative voltage peak is known to occur across the electric terminals. The voltage peak is driven by the inevitable parasitic inductance of an electrical cable that may be connected to the electric terminals. According to the law of induction, the magnitude of the induced voltage is proportional to the rate of change of the magnetic flux and thus proportional to the product of the inductance in the circuit and the rate of change of current during the disconnection process. The inductance of a cable increases with its length.

Since the energy content of the parasitic inductance of the cable at the time of disconnection is proportional to the square of the flowing current, the significance of the above-described phenomenon increases immensely with the magnitude of the strength of the current to be switched. Switching peaks due to the disconnection of small currents may still be easily controlled by passive attenuators and over-voltage protection elements, but this is no longer practical for large currents (e.g. current above 10 Ampere). Therefore, the current is usually commutated by a so-called freewheeling diode above the induction source.

Modern battery packs or in general modern electric energy storage devices have a protective circuit that protects the cells from over-charging, over-temperature, over-current and short circuits, for example. This protective circuit is called a battery management system (BMS for short). Such a BMS often has at least one internal electronic circuit that may comprise a protection switch (e.g. semiconductor-based or a fuse) in the power path (comprising the storage units, e.g. galvanic cells) to disconnect the battery from the consumer or a charger in the event of a fault.

Between a battery pack as an energy source and an electrical consumer, a cable is naturally laid to close the electrical circuit. The high currents that a battery pack is capable of delivering, combined with the inductance of this cable, leads to the described voltage peak with a high energy content when the current is switched off (e.g. by the BMS), which causes an internal protection switch to fail (avalanche breakdown in the case of a semiconductor switch, arcing in the case of a relay). The switch can of course be designed according to the requirement for strength against the high isolation voltage, but this leads to much larger and more expensive components. In the case of a MOSFET (metal oxide semiconductor FET, FET - field effect transistor) as a semiconductor switch, there is the problem of evaluating the avalanche behavior of parallel-connected FETs, which requires extreme over-dimensioning in a robust design as opposed to simply designing for power dissipation, current-carrying capacity, safe operating range and thermal pulse strength. The cost of a DC relay with a large arc chute and high switching current is immense.

The freewheeling diode described above clamps the voltage across the internal electronic circuit in the power path to the level of the supply voltage, which leads to a significant reduction in system costs. Therefore, in practice, the use of a freewheeling circuit branch with a diode across the battery power terminals of an internally switched electric energy storage device is the state of the art. The term "freewheeling circuit branch" refers to the whole electric connection between the two electric terminals, i.e. the freewheeling diode itself and the necessary wiring.

However, there are some risks associated with the use of a freewheeling diode.

Rechargeable battery packs (e.g. based on Lithium Ion, Sodium Ion, Lead Acid) or supercapacitors are often used as modules that can be connected in parallel to increase the total capacity. The parallel connection of the modules by means of electrical connections is sometimes not carried out by the manufacturer of the battery pack, but by its customer, possibly even by the private end user. If battery packs are connected to each other with opposite polarity during this process, a protective mechanism is triggered within the battery packs that interrupts the fault current (internal protection switch of an internal electronic circuit is opened), but this does not occur simultaneously in all battery packs due to component tolerances. The freewheeling diode of a battery pack that has already been disconnected is now in the current path of the opposite battery pack, causing the very large short-circuit current to circulate through the freewheeling diode in the forward direction. This short-circuit current does not decay over time, like the current-driven freewheeling current, but instead continues at its maximum value until the switch-off moment, i.e. the current-time area (current-value over time) is rectangular, and the pulse load on the freewheeling diode is much higher. This fault current is voltage driven according to the level of the supply voltage.

If the short-circuit current detection and disconnection is not fast enough or is even implemented with a fuse, the freewheeling diode must be designed for this case so large that it can withstand the load, which leads to a strong increase in the cost of the component, an increased requirement for cooling and a drastic increase in the required installation space.

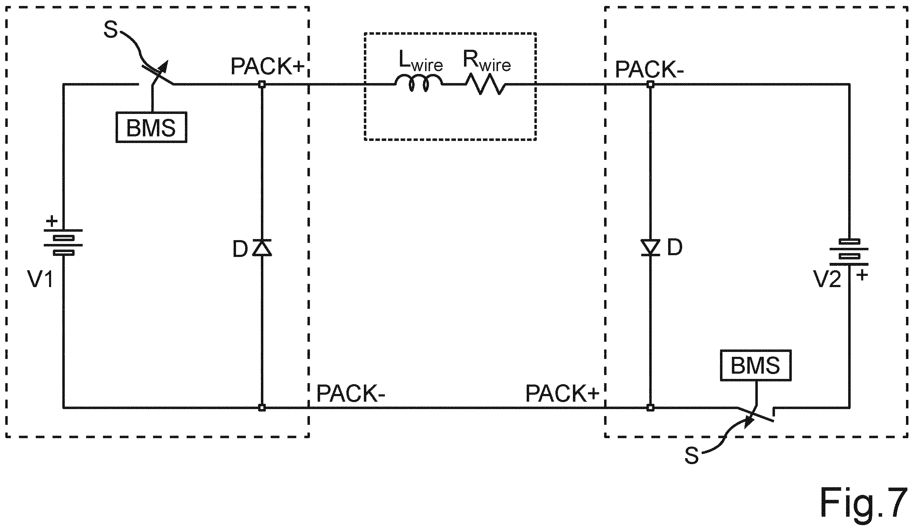

Fig. 7 shows an illustration of this problem where two battery packs PACK1 and PACK 2 with freewheeling diodes D, are connected to each other with reverse polarity of the plus terminal PACK+ and PACK- of the battery packs. The battery PACK 1 has (already) switched off using the internal protection switch S for protecting the storage units that generate the supply voltage V1. Such storage units can each be, e.g., a galvanic cell. The storage units of the battery pack PACK2 still drive a current through the cable (represented by the inductance Lwire and the resistance Rwire) and the freewheeling circuit branch with the diode D of battery pack PACK1, as the internal protection switch S of battery pack PACK2 has not been switched off yet.

A similar error can occur if the polarity of a charger is reversed when connected to the battery.

A major risk due to the freewheeling diode also exists with serial connection of battery modules or with a combination of series and parallel connection.

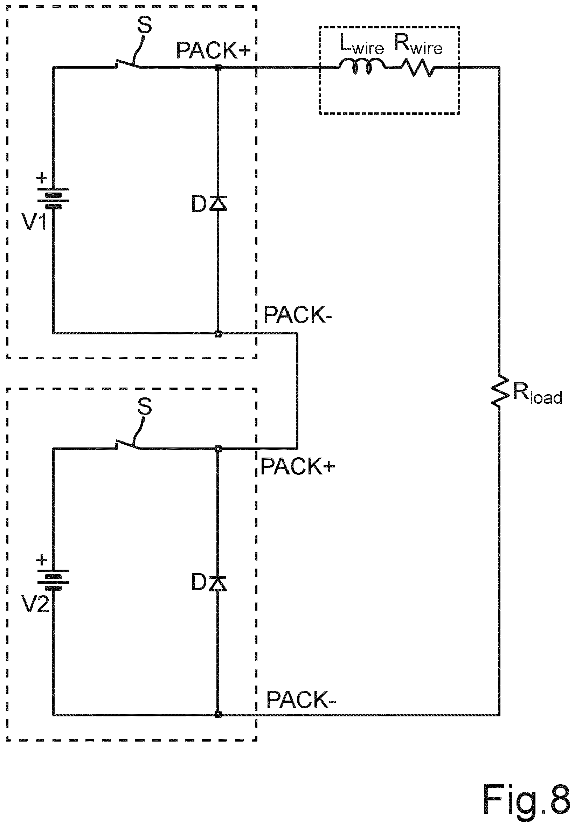

This is illustrated in Fig. 8 by a schematic diagram of serially connected battery packs, connected to an electrical load Rload. The remaining reference signs have the same meaning as in the previous figure.

In this arrangement, as soon as one of the two battery packs shown switches off, the current to the electrical load flows through the freewheeling diode of this battery pack. This may lead to considerable heating and thermal overload of the freewheeling diode D. Here too, designing the freewheeling diode for this load case leads to a strong increase in the cost of the component, increased cooling requirements and an increase in the required installation space.

Freewheeling diodes are not only used for the electric terminals of single battery packs, but also for the electric terminals of larger battery units like battery modules (comprising several battery packs) or for the electric terminal of a whole battery. Following this, such a unit is referred to as an electric energy storage device comprising the electric terminals. For providing a DC supply voltage, two such electric terminals are usually provided, i.e. a plus terminal P+ (e.g. PACK+) and a minus terminal P- (e.g. PACK-) that are both accessible from the outside in order to connect an electric load or an electric cable or electric wiring.

It is an objective of the present invention to provide a self-protecting electric energy storage device that will suppress an accidental short circuiting though its freewheeling circuit branch connecting the electric terminals.

The objective is accomplished by the subject matter of the independent claims. Advantageous developments with convenient and non-trivial further embodiments of the invention are specified in the dependent claims, the following description and the figures.

The invention also comprises embodiments that provide features which afford additional technical advantages.

As one solution the invention comprises an electric energy storage device for providing a supply voltage between to electric terminals that are accessible from outside the energy storage device. The two electric terminals are connected to at least one storage unit that generates the supply voltage. A storage unit can be a galvanic cell or a supercapacitor or a fuel cell or a combination of at least two of these technologies. In the case of a battery, the respective storage unit is a galvanic cell and the electric terminals are also called battery terminals.

For internal protection, at least one of the terminals is connected to the at least one storage unit over an internal electronic circuit (that may be controlled, e.g., by a battery management system, BMS). The internal electronic circuit may comprise an internal protection switch and/or a fuse. Like is known from the prior art, one of terminals is a plus terminal and the other terminal is a minus terminal for the supply voltage, as the supply voltage can be a DC voltage.

For protecting the electric energy storage device, a protection circuit is provided that comprises a freewheeling circuit branch that interconnects the two terminals in parallel to the at least one storage unit and the respective internal electronic circuit (in combination). The protection circuit comprises a freewheeling element, wherein a forward direction of the freewheeling element is directed from the minus terminal to the plus terminal, such that the freewheeling element becomes electrically conductive for a forward current when an electric forward voltage is present that is directed opposite to the supply voltage. Thus, in the described freewheeling event, a forward current may flow from the minus terminal to the plus terminal through the freewheeling circuit branch when the internal electronic circuit (e.g. an intern protection switch) is switched into the electrically blocking off-state and an inductivity of an external cable and/or an external load drives the freewheeling forward current. Note that the term "freewheeling element" refers to a single diode (e.g. a p-n diode) or several such diodes that may be connected in parallel in order to increase the maximum allowable electric current. In particular, the freewheeling element may comprise at least one diode with a respective anode of the at least one diode connected to the minus terminal and a respective cathode of the at least one diode connected to the plus terminal.

In order to avoid the above-described uncontrollable currents through the freewheeling circuit branch, in the freewheeling circuit branch an additional switching element is connected in series to the freewheeling element and a control unit of the protection circuit is connected to a control terminal of the switching element. The control unit is designed to control a switching state or conduction state of the switching element as a function of at least one characteristic quantity of the forward voltage and/or the forward current. Such a characteristic quantity can be, e.g., a duration of a current flow of a forward current, a current strength of the forward current, voltage of the forward voltage. Specific detection circuits and/or measurement circuits for measuring such a quantity can be taken from the prior art. The switching element may be switched binarily between two states (electrically conducting on-state and electrically blocking off-state) or the switching may result in a continuous or stepwise change of the electrical resistance of the switching element, like is it possible in the non-saturated state of transistors (i.e. transient resistors). These two possibilities of controlling the switching element are described here as "conduction state".

The control unit is designed to switch the switching element into the electrically blocking off-state, if the respective characteristic quantity has a predefined trigger value and/or is above or below a predefined trigger threshold. In particular, for the respective characteristic quantity a respective trigger value and/o or trigger threshold is chosen that is not typical or not expected or is even impossible in the case of a forward current that is generated by a freewheeling event of the electric circuit that is connected to the electric energy storage device. If such a trigger value and/or trigger threshold occurs, it is clear that the forward current is an accidental current that is not part of the expected freewheeling event or that the freewheeling event is over and the switching element will then be switched into the off-state. The skilled person can therefore analyze the electric circuit connected to the electric energy storage device and can then choose an appropriate protection circuit that will detect at least one characteristic quantity and the control unit will trigger according to the set trigger value and/or trigger threshold such that the switching element is switched into the off-state.

This provided the advantage that the protection circuit can distinguish between a forward current that results from a true freewheeling event (switching element is held in the electrically conducting on-state) and an accidental forward current that needs to be interrupted (e.g. a short circuit, switching element is switched into the off-state).

The switching element in the freewheeling circuit branch may be based on at least one transistor or a relay switch. In the case of a transistor, the control terminal is the gate or base of the transistor. The switching element of the freewheeling circuit branch can be a transistor with its source or emitter connected to the plus terminal and its drain or collector connected to the minus terminal. The connection may be an indirect connection over the freewheeling element, i.e. the switching element may be wired to the cathode of a diode of the freewheeling element). In particular, a n-channel MOSFET with its source connected to plus terminal and drain connected to minus terminal can be used or an IGBT (insulated gate bipolar transistor).

The invention also comprises further developments that comprise additional technical features that provide additional advantages.

One development comprises that by controlling the conduction state the control unit switches the switching element from the electrically blocking off-state into an electrically conducting on-state when the forward voltage sets in and then sets the switching element back into the off-state after a predefined amount of time or time duration. Thus, one characteristic quantity is the duration of the forward current. This provided the advantage that a temporal limitation of the pass time for the forward current is set. This will limit the current-time-area and can prevent overheating of the electric component. The maximum pass time is preferably less than 1s. It should be at least 5 Tau = 5 * L_wire / R_wire, with Tau (τ) the well-known time constant. The feature that the control unit switches the switching element into the on-state when the forward voltage sets in can be implemented by powering the control unit itself on the basis of the forward voltage. Thus, if no forward voltage is present (but, e.g., instead the opposite supply voltage), the control unit will keep the switching element in the off-state (as the gate-source or base-emitter voltage is too small or even negative).

One development comprises that the control unit comprises a parallel RC-circuit over which the control terminal is connected to the plus terminal and a series RC-circuit over which the control terminal is connected to the minus terminal. The series RC-circuit can then act as charge pump or charge limiter for the parallel RC-circuit. When the DC forward voltage sets in, the capacity C_gate of the parallel RC-circuit will be charged once (switching the switching element into the on-state) and it will then discharge over its parallel resistor R_gate such that the above-described timer effect is achieved, i.e. switching the switching element into the off-state after a predefined amount of time occurs.

One development comprises that the series RC-circuit also comprises a diode with its forward direction leading from the minus terminal to the control terminal. Thus, any current through the control unit is blocked and thus not energy is wasted when the supply voltage is present instead of the forward voltage, i.e. when the electric energy storage device is providing electric power.

One development comprises that the protection circuit comprises an overcurrent cut-off unit that is designed to limit the current strength of the forward current to a maximum value. The overcurrent cut-off unit comprises a delay element that keeps the limitation of the forward current inactive for a predefined amount of delay time after the forward voltage sets in. This provides the advantage that the initial peak current in a freewheeling event the peak of the freewheeling forward current is not blocked by the overcurrent cut-off unit. Nevertheless, after the predefined delay time, if the forward current strength is still larger than the maximum value (i.e. it can be assumed that a short circuit event is occurring), the limitation of the maximum forward current is enforced. The delay time is preferably larger 1ms less than 500ms. The delayed overcurrent cut-off unit provides the advantage that a voltage driven short circuit current is limited. Note that a short circuit will be interrupted completely once the protection circuit, if the above-described control unit switches the switching element into an electrically conducting off-state after the predefined amount of time. In the meanwhile, the limitation of the maximum current will keep the current-time-area below a predefined value and will thus protect the electric components in a short-circuit event.

One development comprises that the delay element comprises an integrator circuit, in particular a series RC-circuit. This provides a technical robust and cheap solution.

One development comprises that the overcurrent cut-off unit comprises a cut-off switch that connects the control terminal of the switching element of the freewheeling circuit branch to the plus terminal. The overcurrent cut-off unit is designed to set the cut-off switch into an on-state and thereby shift the potential of the control terminal to the potential of the plus terminal, if the current strength is greater than the maximum value. Such a cut-off switch can be implemented on the basis of a transistor with comparator for controlling the transistor or on the basis of an adjustable shunt regulator or an adjustable Zener diode circuit, like they are available in the integrated circuit TL431.

One development comprises that the control unit is connected to the plus terminal over the overcurrent cut-off unit. Thus, both the control unit and the overcurrent cut-off unit are interdependent.

One development comprises that the freewheeling circuit branch also comprises a resistor that is connected in series to the freewheeling element. This provides the advantage that the current strength of the forward current is limited and the energy from inductive element is dissipated in the resistor. The resistor is preferably a bare metal resistor that is preferably shaped as an arched metal strip in order to allow a cooling air flow.

One development comprises that the overcurrent cut-off unit is designed to sense the current strength as a function of a shunt voltage across a shunt resistor element in the freewheeling circuit branch. As the shunt resistor the switching element and/or a specific shunt resistor or the above-described resistor.

One development comprises that the protection circuit comprises an activation terminal for receiving an activation signal. The protection circuit is designed to switch between an deactivated state and an activated state as a function of the activation signal, wherein in the deactivated state the protection circuit keeps the switching element in an electrically blocking state independently of the forward voltage and of the forward current (e.g. by permanently connecting the transistor control terminal to the plus terminal) and in the activated state the conduction state of the switching element is set as a function of the at least one characteristic quantity of the forward voltage and/or the forward current. For example the above-described BMS can activate the protection circuit as a function of its own active state such that the conduction state of the internal electronic circuit and the conduction state of the protection circuit are coordinated (internal electronic circuit in the off-state turns the protection circuit into the activated state).

One development comprises that the protection circuit is designed to generate an event signal for signaling a freewheeling event and/or an overcurrent event when the protect circuit changes the conduction state of the switching element due to an occurrence of a forward voltage and/or an overcurrent. For example, the control signal at the control terminal can be forwarded as the event signal. The event signal can be an overcurrent signal that signals that the overcurrent cut-off circuit detected an overcurrent. One development comprises that the internal electronic circuit is controlled by a management system, e.g. a battery management system, BMS, of the energy storage device and the management system is designed to receive the event signal and to permanently set the internal electronic circuit (e.g. its internal protection switch) into the off-state and/or the protection circuit into the deactivated state for providing a one-shot blocking functionality. This can be used in connection with a one-shot functionality of the energy storage device that will permanently set the protection circuit into the deactivated state and/or the internal electronic circuit (e.g. its protection switch) of the energy storage device into the off-state, if the event signal occurs.

One development comprises that the protection circuit comprises at least one temperature sensor for sensing a temperature of at least one element of the freewheeling circuit branch, wherein the protection circuit is designed to provide a respective temperature signal of the at least one temperature sensor and/or an overheat signal that is signaling that a temperature signal has a signal value that is larger than a predefined threshold value. This can be used to detect an overheating event.

The control unit and/or the overcurrent cut-off unit can also be based on a microcontroller.

As a further solution the invention comprises a protection circuit for an electric energy storage device, e.g. a battery device. This protection circuit may be connected to or added the electric terminals of the electric energy storage device during the production of the energy storage device or later as a retrofit solution. The protection circuit comprises a plus connector for electrically connecting to a plus terminal of the energy storage device and a minus connector for electrically connecting to a minus terminal of the energy storage device. The respective connector can be, e.g., a soldering pad or a wire.

The protection circuit comprises the described freewheeling circuit branch that interconnects the plus connector and the minus connector and comprises the freewheeling element. The freewheeling circuit branch provides the freewheeling element that comprises at least one diode, wherein a forward direction of the freewheeling element is directed from the minus connector to the plus connector, such that the freewheeling element becomes electrically conductive for a forward current when an electric forward voltage is present that is directed from the minus connector to the plus connector. Like has already been explained, in the freewheeling circuit branch a switching element is connected in series to the freewheeling element and the control unit of the protection circuit is connected to a control terminal of the switching element, wherein the control unit is designed to set a conduction state of the switching element as a function of at least one characteristic quantity (e.g. duration, current strength, voltage value) of the forward voltage and/or the forward current.

The invention also comprises the combinations of the features of the different embodiments.

In the following an exemplary implementation of the invention is described. The figures show:
- Fig. 1: a schematic illustration of an embodiment of the inventive electric energy storage device;
- Fig. 2: a diagram showing a current strength of a forward current during a freewheeling event;
Fig. 3 a schematic illustration of an implementation of a control unit;
Fig. 4 a schematic illustration of a metal resistor.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures identical reference signs indicate elements that provide the same function.

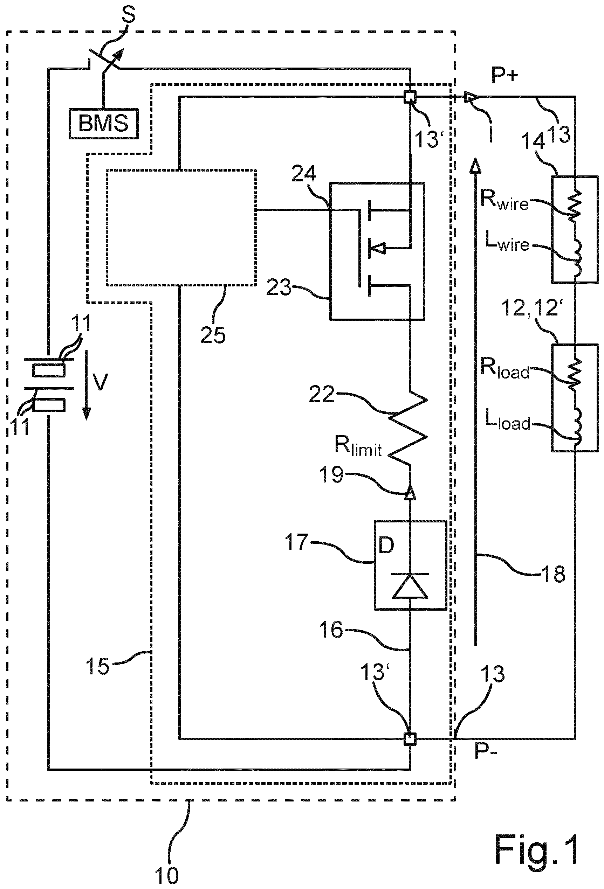

Fig. 1 shows an electric energy storage device 10 that may comprise at least one storage unit 11 for generating a supply voltage V that is a DC voltage which is made available to an external load 12 at electric terminals 13, one of which may be a plus terminal P+ of the energy storage device 10 and the other electric terminal 13 can be the minus terminal P- of the energy storage device. Each terminal 13 is accessible from outside the energy storage device 10, such that even an un-experienced user may connect the terminals 13 to another electric device. Some of the storage units 11 may be connected in series and/or in parallel as is known from the prior art.

The load 12 is represented by its resistance R_load. A wiring or cable 14 for connecting the load 12 to the energy storage device 10 is represented by its resistance R_wire and its inductivity L_wire. For example, the load 12 can be a motor controller 12' like it may be implemented in an electric vehicle, for example a forklift vehicle.

The energy storage device 10 can be designed as a Li-Ion battery with BMS, disconnector internal protection switch and freewheeling diode, as is explained in the following. The internal protection switch is an example for an internal electronic circuit.

In Fig. 1 it is shown that the plus terminal P+ is connected to the storage units 11 over an internal protection switch S which may be controlled by a management system, e.g. a battery management system BMS as is known from the prior art.

When the internal protection switch S is opened while an electric current I is still flowing, the inductivity L_wire will induce a voltage between the terminals 13 that is directed opposite to the supply voltage V at the terminals 13 (freewheeling event). For providing a freewheeling possibility at the energy storage device 10, a protection circuit 15 may be provided that may interconnect the terminals 13 with a freewheeling circuit branch 16. The protection circuit 15 may be connected between the terminals 13 by connectors 13', e.g. a respective wire or soldering pad.

The freewheeling branch 16 may comprise a freewheeling element 17 that may comprise at least one diode D. The forward direction of the diode D is directed from the minus terminal P- to the plus terminal P+, such that when the voltage is induced by the inductivity of the wiring or cable 14, this voltage acts as a forward voltage 18 with a positive potential directed from the minus terminal P- to the plus terminal P+. This forward voltage 18 can generate a forward current 19 in the freewheeling circuit branch 16.

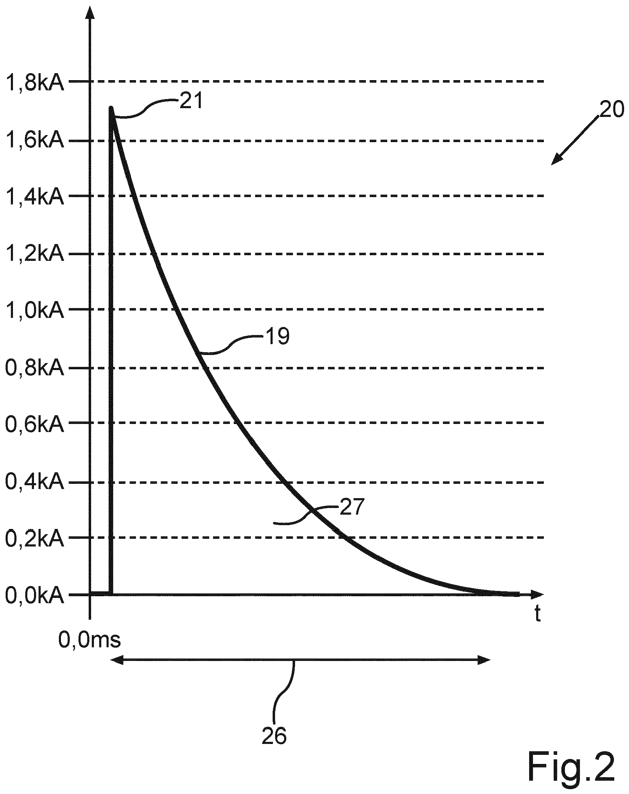

Fig. 2 illustrates over time t a graph of the possible signal of the current strength of the forward current 19 as it is typically generated in a freewheeling event 20. The current strength is given here in kiloampere kA. Typically, the forward current in a freewheeling event 20 starts with a peak 21 that has a current strength in a value range that can also be caused by a short circuit.

Continuing with Fig. 1, the freewheeling circuit branch 16 may also comprise a limiting resistor 22 with a resistance R_limit that may be used to dissipate the energy provided by the forward current 19.

Also, the freewheeling circuit branch 16 may also comprise a switching element 23 that may be based for example on a transistor, for example an n-channel MOSFET. A source or an emitter of the transistor may be connected to the plus terminal, a drain or collector of the transistor may be connected to the minus terminal P-. Note that "connected to" may also imply that the connection leads over or through other electric elements as is shown in Fig. 1.

A control terminal 24 of the switching element, for example the gate or base of the transistor, may be connected to a control unit 25 that may control the conduction state of the switching element 23. Like is shown in Fig. 1, the control unit 25 may also be connected to the plus terminal P+ and the minus terminal P- such that the control unit 25 will be powered by the forward voltage 18 when the forward voltage 18 is present, i.e. when the internal protection switch S is in the off-state and the forward voltage 18 is applied at terminals 13 from an external electric circuit.

The control unit 25 is designed to switch the switching element 23 into an on-state when the forward voltage 18 sets in, i.e. when a positive DC voltage reading from the minus terminal P- to the plus terminal P+ such that the freewheeling element 17 with the at least one diode D becomes electrically conducting in the forward direction of the at least one diode. Thus, the forward current 19 will flow through the freewheeling circuit branch 16 from the minus terminal P- to the plus terminal P+.

Referring to Fig. 2, in the freewheeling event 20, the forward current 19 may flow and therefore a voltage peak at the internal protection switch S will be prevented.

The control unit 25 may be designed to switch the switching element 23 back into an off-state after a predefined time duration 26 that can be larger than 0 and less than 1 second. Overall, during this freewheeling event 20 a limited current-time-area 27 is covered, i.e. the amount of energy dissipating in the protection circuit 15 is limited.

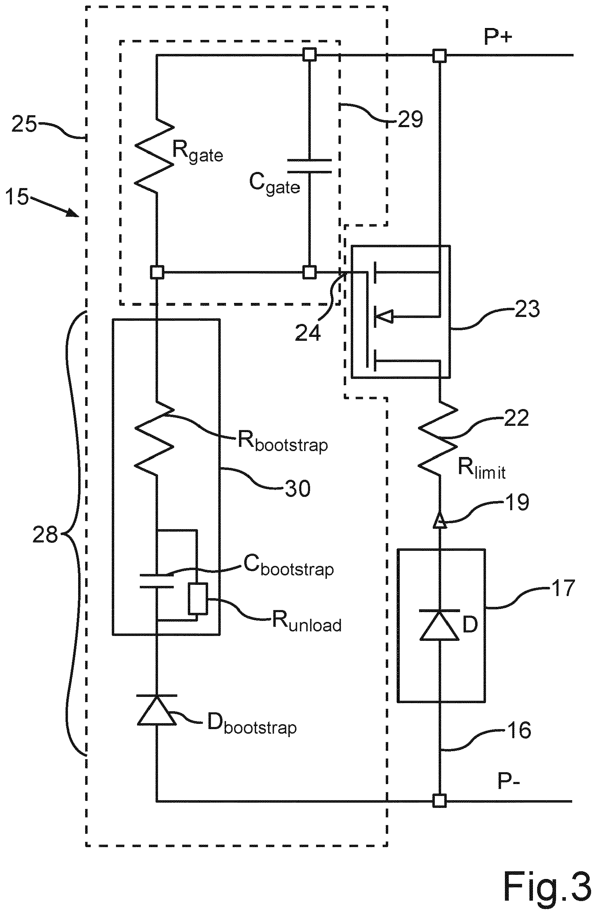

Fig. 3 illustrates a possible implementation of the control unit 25. The control unit 25 can be implemented on the basis of a charge pump 28.

Fig. 3 shows the protection circuit 15 with the switching element 23, the limiting resistor 22 and the freewheeling element 17 in the freewheeling circuit branch 16.
The control unit 25 may comprise a parallel RC-circuit 29 connecting the control terminal 24 to the plus terminal P+ and a serial RC-circuit 30 connecting the control terminal 24 to the minus terminal P-. A capacity C_gate of the parallel RC-circuit 29 can be provided on the basis of a capacitor, a resistance R gate of the parallel RC-circuit 29 can be provided by a resistor element. The serial RC-circuit 30 can comprise a resistor with a resistance R_bootstrap and a capacitor with a capacitance C_bootstrap. The serial RC-circuit 30 may be connected to the minus terminal P- or the control terminal 24 over a diode D_bootstrap with its forward direction directed from the minus-terminal P- to the control terminal 24.

The capacitance C_gate can be in the range of the gate capacity Cg of the transistor of the switching elements 23 (for example Cg +/- 20%, but other configurations may also be beneficial). R-gate can be in the range from 5 kiloohms to 100 kiloohms, Rbootstrap can be in the range of 1ohm to 100ohm, C_bootstrap can be in the range of 2 times up to 3 times of C_gate, the bootstrap diode D_boostrap can have a breakthrough voltage that should be larger than the supply voltage V, preferably at least 1.5 times V.

Note that in Fig. 3 (and likewise in the other figures), not all electric elements are shown, but only those electric elements needed for explaining the functionality of the protection circuit 15. For example, Fig. 3 shows that for unloading the capacitor of capacitance C_bootstrap, a resistor with resistance R_unload may be provided (R_unload may have a high resistance value, for example larger than 100 kiloohms, preferably more than 500 kiloohms).

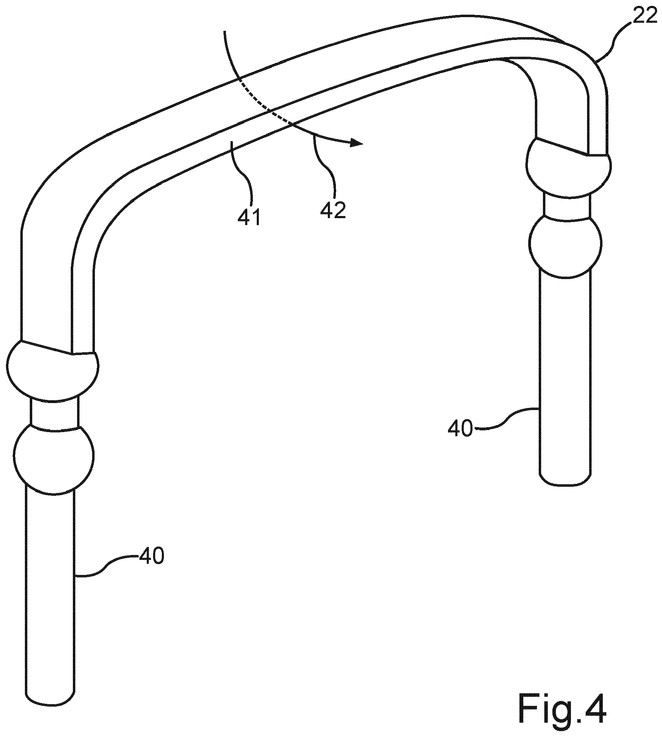

Fig. 4 illustrates a possible way of implementing the limiting resistor 22 with a resistance R_limit. Like is shown, the resistor 22 may have two pins 40 connecting the limiting resistor 22 to a printed circuit board in the known manner. The limiting resistor 22 may be designed as a metal resistor using an arched metal stripe 41 that may allow an airflow 42 passing by the metal stripe 41 such that the heat generated by the forward current 19 may be taken away by the airflow 42.

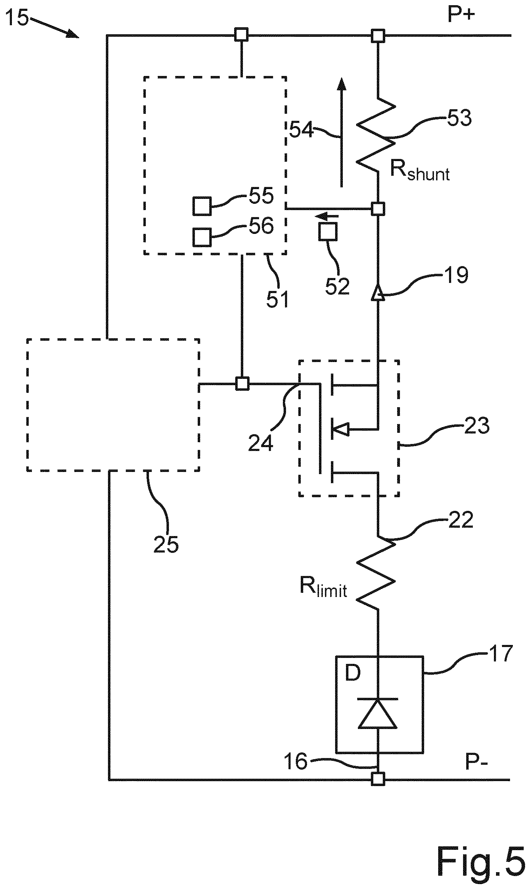

Fig. 5 illustrates an implementation of the protection circuit 15 with an additional overcurrent cut-off unit 51 that may receive a signal 52 indicative of the current strength of the forward current 19. For example, a shunt resistor 53 may be provided in the freewheeling circuit branch 16 such that by the forward current 19 a shunt voltage 54 is generated that can be used as the signal 52. The overcurrent cut-off unit 51 may control the switching element 23 at the control terminal 24 like the control unit 25. If a current strength is larger than a predefined maximum value 55 (I_max) is detected, the switching element 23 may be switched into the off-state or -in the case of a transistor- the conductivity of the transistor may be reduced or set into the off-state. Referring to Fig. 2, the peak 21 of the forward current 19 in the case of a (true) freewheeling event 20, is not affected by the overcurrent cut-off unit 51 even if the peak value of the current peak 21 is larger than the maximum value 55. This is achieved by a delay element 56 that controls the overcurrent cut-off unit 51 in such a way that after the forward current 19 has set in or started, the maximum value 55 will only be applied after the delay element 56 has passed.

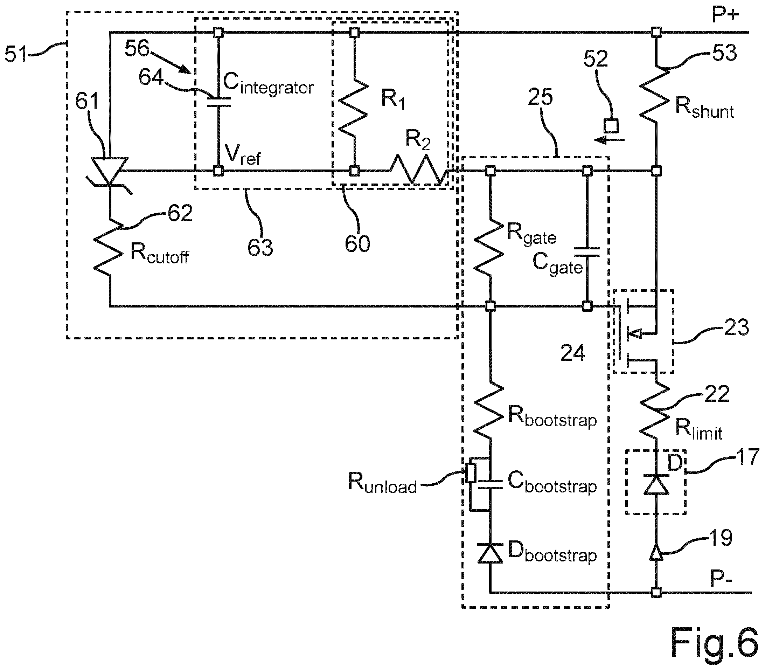

Fig. 6 illustrates a possible implementation of the protection circuit 15 with both the control unit 25 and the overcurrent cut-off unit 51. The control unit 25 may be implemented as explained in connection with Fig. 3. The control unit 25 may be connected to the plus terminal P+ over the overcurrent cut of unit 51, for example like in the manner shown in Fig. 6.

The overcurrent cut-off unit 51 may receive the signal 52 and may apply a voltage divider 60 that is connected in parallel to the shunt resistor 53 and provides resistors R1 and R2. By choosing the values of R1 and R2, the maximum value 55 may be set.

The voltage divider 60 may generate a detection voltage V_ref that may be to control a cut-off switch 61 that may be implemented for example as an adjustable shunt regulator, for example based on the integrated circuit TL431. The cut-off switch 61 may connect the control terminal 24 with the plus terminal P+. An additional cut-off resistor 62 may be connected in series to the cut-off switch 61 such that discharging the gate capacity at the control terminal 24 may be controlled by the cut-off resistor 62. The delay element 56 may be implemented on the basis of an integrator circuit 63 with an integrator capacitor 64 with a capacitance C_integrator that acts as an integrator for the detection voltage V_ref. The integrator circuit 63 may also comprise R1 to provide a parallel RC-circuit.

The capacitance C_integrator can be in the range of 10 nanofarads to 1microfarads. The voltage divider 60 can have resistors in the range of R1:
10 kiloohm to 1 megaohm, R2: 100 ohm to 10 kiloohm. The cut-off resistor 62 may have a resistance in the range of 10 ohm to 100 ohm. The shunt resistor 53 may have a resistance R_shunt in the range such that Vref divided by the maximum value Imax (i.e. maximum value 55) is adapted in a way that the cut-off switch 61 is triggered or switched into the on-state when the forward current 19 reaches the maximum value 55.

Overall, an intrinsically safe freewheeling diode circuit is provided. A safe freewheeling diode can be realized by limiting the maximum forward current in the case of a voltage-driven freewheeling current and limiting the forward time without massive over-dimensioning. The pass time is large enough to allow the largest freewheeling current to decay safely with maximum time constant. If e.g. a battery supplies a short-circuit current of 1000 A, the freewheeling diode must be specified for this maximum value; as a rule, several diodes with a smaller pulse current strength are connected in parallel for this purpose.

Limiting the current to a maximum value can be easily established in the case of the voltage-driven freewheeling current using a resistive resistor in series with the freewheeling diode. A semiconductor switch can be used to time limit the forward current. If the system voltage is relatively low, MOSFET switches provide good performance. In this case, the lowest cost with high current carrying capacity and low on-resistance can be achieved with an N-channel MOSFET. For system voltages greater than a few hundred volts, an IGBT can be used as the switching element.

As a solution to the problem described above, the idea comprises harnessing the negative voltage transient (forward voltage 18) across the terminals of the energy storage device 10 that accompanies the freewheeling forward current 19, in the manner of a charge pump, to drive a circuit breaker that is in series with the freewheeling diode. The amount of charge transferred to the gate of the N-FET by the charge pump is large enough to recharge the gate Cg (gate capacitance) and Miller capacitance and keep the channel conducting for the freewheeling period.

The decay time of the freewheeling current is mainly determined by the power dissipation across the freewheeling diode. Because of the nonlinear diode characteristic, it is difficult to calculate, but can be well estimated with an energy consideration, provided that the diode is sufficiently well specified with respect to surge current and pulse energy capability.

With the current limiting resistor (R_limit) inserted, the time constant is drastically reduced. This allows the current load of the power semiconductors to be increased in favor of the component cost, most of the circulating energy is converted in the limiting resistor. Metal element resistors are very highly rated and well specified for short duration pulses/surges. SMD (surface mounted device) versions are also offered.

In addition to limiting the maximum forward current Imax of the freewheeling circuit branch, the resistance value R_limit can also be used to set the level of the induction voltage V_peak in the freewheeling case across the electric terminals, if the application defines a limit for this. U_peak = -Imax • R_limit - VF; (VF is the forward voltage 18 and R_limit >> R_{DSon} of the transistor, e.g.
R_limit > 100 · R_{DSon}).

The size of the limiting resistor is therefore limited by the level of the permissible clamping level. This may be the case with potential-bound (e.g. ground-related) communication lines. In this case, a corresponding number of freewheeling diodes or freewheeling branches must be connected in parallel. In this case, the costs for the freewheeling branch must be offset against the design of the communication interface (e.g. isolated or with high common-mode resistance). When designing, it is important to remember that the value of the switched-off current (e.g. the short-circuit current) continues to flow initially in the freewheeling circuit.

As described above, the load of the power semiconductors (diode, switch) in the case of polarity reversal can be significantly higher (depending on the internal resistance of the source of the fault current) than in the freewheeling event 20. If this is the case, the freewheeling circuit branch must be designed for the level of the fault current in the case of polarity reversal, which can cause significantly higher costs than a mere design for the freewheeling case. In this case, the use of an active current limiter is an option. The current limiter must be designed in such a way that it does not limit the rapidly decaying freewheeling current and only becomes active when the fault current remains high. The current limiting resistor, which is present anyway, can also be used as a detector for an integrating threshold switch. To simplify such a circuit, which is to act on the control gate of the circuit breaker, it is recommended to split the current limiting resistor by connecting the part of the detector as a shunt into the source line of the N-channel FET.

The threshold cut-off switch can now be built up e.g. with an inexpensive shunt reference like the TL431 in comparator circuit.

Additional functions may also be provided.

The self-controlling freewheeling diode can easily be equipped with an enable input, so that a freewheeling current is only allowed when desired, e.g. only in the active state of the BMS.

The self-controlling freewheeling diode could also be equipped with a signaling function that signals activation of the freewheeling diode, e.g. as an indicator of system malfunction.

Furthermore, temperature monitoring of the power semiconductors is conceivable. Depending on the overall system, it might make sense to limit the release of the freewheeling diode to a single event, e.g. if the system tends to oscillate the switches. This "one-shot" functionality has already been implemented and tested as an option in terms of circuitry.

Overall, the examples show how a self-controlling safe freewheeling diode can be provided.

### REFERENCE SIGNS

- 10: electric energy storage device
- 11: storage unit
- 12: load
- 12': motor controller
- 13: electric terminal
- 13': connector
- 14: cable
- 15: protection circuit
- 16: circuit branch
- 17: freewheeling element
- 18: forward voltage
- 19: forward current
- 20: freewheeling event
- 21: current peak
- 22: limiting resistor
- 23: switching element
- 24: control terminal
- 25: control unit
- 26: time duration
- 27: current-time-area
- 28: charge pump
- 29: parallel RC-circuit
- 30: serial RC-circuit
- 40: pin
- 41: metal stripe
- 42: airflow
- 51: cutoff unit
- 52: overcurrent signal
- 53: shunt resistor
- 54: shunt voltage
55 maximum value
56 delay element
60 voltage divider
61 cutoff switch
62 cutoff resistor
63 integrator circuit
64 integrator capacitor

## Claims

1. Electrical energy storage device (10) for providing a supply voltage (V) between two electric terminals (13) that are accessible from outside the energy storage device (10), wherein the two terminals (13) are connected to at least one electrical storage unit (11) that generates the supply voltage (V), wherein at least one of the terminals (13) is connected to the at least one storage unit (11) over an additional internal electronic circuitry (S), and wherein one of terminals (13) is a plus terminal (P+) and the other terminal (13) is a minus terminal (P-) for the supply voltage (V), and wherein
a protection circuit (15) is provided that comprises a freewheeling circuit branch (16) that interconnects the two terminals (13) in parallel to the at least one storage unit (11) and the respective internal electronic circuit (S) and that comprises a freewheeling element (17), wherein the freewheeling element (17) comprises at least one diode (D) with the forward direction of the freewheeling element (17) being directed from the minus terminal (P-) to the plus terminal (P+), such that the freewheeling element (17) becomes electrically conductive for a forward current (19) when an electric forward voltage (18) is present that is directed opposite to the supply voltage (V), **characterized in that**
in the freewheeling circuit branch (16) a switching element (23) is connected in series to the freewheeling element (17) and a control unit (25) of the protection circuit (15) is connected to a control terminal (24) of the switching element (23), wherein the control unit (25) is designed to control a conduction state of the switching element (23) as a function of at least one characteristic quantity of the forward voltage (18) and/or the forward current (19), wherein the control unit (25) is designed to switch the switching element (23) into an electrically blocking off-state, if the respective characteristic quantity has a predefined trigger value and/or is above or below a predefined trigger threshold.

2. Energy storage device (10) according to claim 1, wherein by controlling the conduction state the control unit (25) switches the switching element (23) from an electrically blocking off-state into an electrically conducting on-state when the forward voltage (18) sets in and then sets the switching element (23) back into the off-state after a predefined time duration (26).

3. Energy storage device (10) according to any of the preceding claims, wherein the control unit (25) comprises a parallel RC-circuit (29) over which the control terminal (24) is connected to the plus terminal and a series RC-circuit over which the control terminal (24) is connected to the minus terminal.

4. Energy storage device (10) according to claim 3, wherein the series RC-circuit comprises a diode with its forward direction leading from the minus terminal to the control terminal (24).

5. Energy storage device (10) according to any of the preceding claims, wherein the protection circuit (15) comprises an overcurrent cut-off unit that is designed to limit the current strength of the forward current (19) to a maximum value (55), wherein the overcurrent cut-off unit comprises a delay element (56) that keeps the limitation of the forward current (19) inactive for a predefined amount of delay time after the forward voltage (18) sets in.

6. Energy storage device (10) according to claim 5, wherein the delay element (56) comprises an integrator circuit (63), in particular a series RC-circuit.

7. Energy storage device (10) according to any of the claims 5 or 6, wherein the overcurrent cut-off unit comprises a cut-off switch that connects the control terminal (24) of the switching element (23) of the freewheeling circuit branch (16) to the plus terminal, wherein the overcurrent cut-off unit is designed to set into an on-state and thereby shift the potential of the control terminal (24) to the potential of the plus terminal, if the current strength is greater than the maximum value (55).

8. Energy storage device (10) according to any of the claims 5 to 7, wherein control unit (25) is connected to the plus terminal over the overcurrent cut-off unit.

9. Energy storage device (10) according to any of the preceding claims, wherein the freewheeling circuit branch (16) also comprises a resistor that is connected in series to the freewheeling element (17).

10. Energy storage device (10) according to any of the preceding claims, wherein the protection circuit (15) comprises an activation terminal for receiving an activation signal and wherein the protection circuit (15) is designed to switch between a deactivated state and an activated state as a function of the activation signal, wherein in the deactivated state the protection circuit (15) keeps the switching element (23) in an electrically blocking state independently of the forward voltage (18) and of the forward current (19) and in the activated state the conduction state of the switching element (23) is set as a function of the at least one characteristic quantity of the forward voltage (18) and/or the forward current (19).

11. Energy storage device (10) according to any of the preceding claims, wherein the protection circuit (15) is designed to generate an event signal for signaling a freewheeling event (20) and/or an overcurrent event when the protect circuit changes the conduction state of the switching element (23) due to an occurrence of a forward voltage (18) and/or an overcurrent.

12. Energy storage device (10) according to claim 11, wherein the internal electronic circuit is controlled by a battery management system, BMS, of the energy storage device (10) and the BMS is designed to receive the event signal and to permanently set the internal electronic circuit into the off-state and/or the protection circuit (15) into the deactivated state for providing a one-shot blocking functionality.

13. Energy storage device (10) according to any of the preceding claims, wherein the protection circuit (15) comprises at least one temperature sensor for sensing a temperature of at least one element of the freewheeling circuit branch (16), wherein the protection circuit (15) is designed to provide a respective temperature signal of the at least one temperature sensor and/or an overheat signal that is signaling that a the temperature signal has a signal value that is larger than a predefined threshold value.

14. Protection circuit (15) for an electric energy storage device (10), wherein the protection circuit (15) comprises a plus connector (13') for electrically connecting to a plus terminal of the energy storage device (10) and a minus connector (13') for electrically connecting to a minus terminal of the energy storage device (10) and wherein
the protection circuit (15) comprises a freewheeling circuit branch (16) that interconnects the plus connector (13') and the minus connector (13') and that comprises a freewheeling element (17), wherein the freewheeling element (17) comprises at least one diode and the forward direction of the freewheeling element (17) is directed from the minus connector (13') to the plus connector (13'), such that the freewheeling element (17) becomes electrically conductive for a forward current (19) when an electric forward voltage (18) is present that is directed from the minus connector (13') to the plus connector (13'),
**characterized in that**
in the freewheeling circuit branch (16) a switching element (23) is connected in series to the freewheeling element (17) and a control unit (25) of the protection circuit (15) is connected to a control terminal (24) of the switching element (23), wherein the control unit (25) is designed to set the conduction state of the switching element (23) as a function of at least one characteristic quantity of the forward voltage (18) and/or the forward current (19).
